# EUROPEAN PATENT APPLICATION

(11) **EP 4 546 013 A1**
(43) Date of publication of application: **30.04.2025**
(21) Application number: 24208708.8
(22) Date of filing: 24.10.2024
(51) Int. Cl.: G01S 17/89, G01S 17/86, G01S 7/51

(54) **SYSTEM AND METHOD FOR FORESTRY PROJECT COMPLIANCE AND EXECUTION**

(30) Priority: 24.10.2023 US 202363592853 P
(71) Applicant: Earth Force Technologies, Inc., Oregon Eugene 97405 (US)
(72) Inventor: ZVIRAN, Amir, 6249440 Tel Aviv-Yafo (IL); SHAVIT, Alon, Kadima-Zoran (IL); LIVNEH, Ron, 6970083 Tel-Aviv (IL); STANEFF, Geoffrey Daniel, Woodinville, 98077 (US)
(74) Representative: D Young & Co LLP

(57) **Abstract**

A forestry vehicle includes a number of different sensors, including LIDAR. A two-stage SLAM technique is used in combination with landmark trees to generate a tree map. This SLAM technique avoids large loop closures by resolving point cloud data into an arrangement of landmarks, reducing the computational working set to support real-time operations. A variety of services and visualizations are supported by the tree map.

## Description

### CROSS-REFERENCE TO RELATED APPLICATIONS

The present disclosure claims the benefit of US Provisional App. No. 63/592,853.

### FIELD OF THE INVENTION

The present disclosure generally relates to forestry management. More particularly, the present disclosure related to the use of sensor data for forestry management.

### BACKGROUND

Modern forestry management often includes the combination of heavy equipment operation, cartography, ecology, silviculture, mill and timber grading, and several other specialized areas of study in order to successfully complete the land management objectives of any given project. This set of skills is often spread around dozens of experts and project participants, who all work together to achieve the shared objectives.

There are many challenges in generating the information needed to manage forestry vehicles to perform different tasks, including accurately identifying trees to be thinned. Forestry management poses a number of challenges. One of these lies in limitations of GPS positioning system. Understanding where a forestry vehicle is located in the world is complicated by the rugged and remote nature of typical forestry projects, where tall ridgelines and heavy canopy conspire to reduce the efficacy of GPS based solutions.

### SUMMARY

A forestry vehicle data processing and management system processes various types of sensor data such as LiDAR, GPS, IMU, and video camera data. Two pass SLAM processing is used to generate patches, which may be referenced to landmark trees. More generally, the patch processing may take into account various factors. A global map generation process generated various maps, such as a unified tree map and other maps from which real time operator guidance is generated to create a variety of different real time operator outputs that are displayed on a display device. Examples include tree metrics, basal area, tree density, boundaries, next tree targe, forbidden trees, map landmarks and performance reports.

In one implementation, a forestry vehicle system includes: sensors disposed on the forestry vehicle including a camera, a light detection and ranging (LiDAR) senor, an inertial management unit (IMU), and a global position system (GPS) sensor; processing system configured to generate a tree map including a catalog of landmark trees and metadata including performing LIDAR-based Simultaneous Localization and Mapping (SLAM) with patch processing of patches referenced to landmark trees to create reference patches where vehicle position within that patch is known and locking new patches to georeferenced prior patches; and wherein a real time tree map provides patch position information coordinated with real time video. In some implementations, the processing system performs tree detection and map optimization to aid in tree mapping. In some implementations patch processing includes coalescing detection objects into a collection of landmark trees oriented with one another. In some implementations.

In one implementation, visualization subsystem generates overlays of information in a video camera display. In one implementation the visualization subsystem generates overlays of tree information in a video camera display to generate an active work assessment display. In one implementation, the visualization subsystem generates virtual guidance on a next action display based on the tree map and a forestry project specification. In one implementation, the visualization subsystem is configured to generate a portion of a forest survey of tree present at an initial time and trees removed at a project completion. In one implementation, the visualization subsystem generates a visualization of tree diameter and tree density in at least one region. In one implementation, the subsystem generates a record of forestry work progress.

In one implementation, large loop closures of the SLAM are prevented by resolving point cloud data into an arrangement of landmarks.

### BRIEF DESCRIPTION OF THE DRAWINGS

The present disclosure is illustrated by way of example, and not by way of limitation in the figures of the accompanying drawings in which like reference numerals are used to refer to similar elements.
Figure 1 is a block diagram illustrating a system for processing LIDAR and video data for a forestry vehicle with 2-stage SLAM processing in accordance with an implementation.
Figure 2A illustrates an example of a basic SLAM in the 2-stage SLAM processing in accordance with an implementation.
Figure 2B illustrates an example patch creation in accordance with an implementation
Figure 2C illustrates an example of global mapper generating mapping information example in accordance with an implementation..
Figure 2D illustrates an example of a real time operator display in accordance with an implementation.

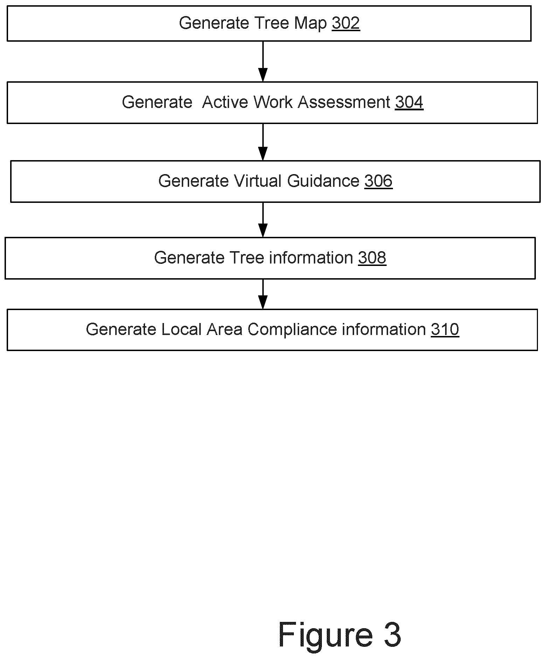

Figure 3 is a block diagram illustrating a general method of providing services based on a tree map in accordance with an implementation.
Figure 4 is a flow chart of an example general method for generating a tree map in accordance with an implementation.
Figure 5 is a flow chart of an example alternative method for generating a tree map in accordance with an implementation.
Figure 6 illustrates a method of determining DBH in accordance with an implementation.
Figure 7 illustrates annotations displayed in a camera view including tree DBH ( (diameter at breast height) and distance information in accordance with an implementation.
Figure 8 illustrates a user interface having an update inspect view showing a basal area menu and vehicle field of view and two selected trees with distance line between them in accordance with an implementation.
Figure 9 illustrates a user interface having an update inspect wide view showing a spacing menu in accordance with an implementation.
Figure 10 illustrates a user interface showing virtual guidance and project layout user interface in accordance with an implementation.

### DETAILED DESCRIPTION

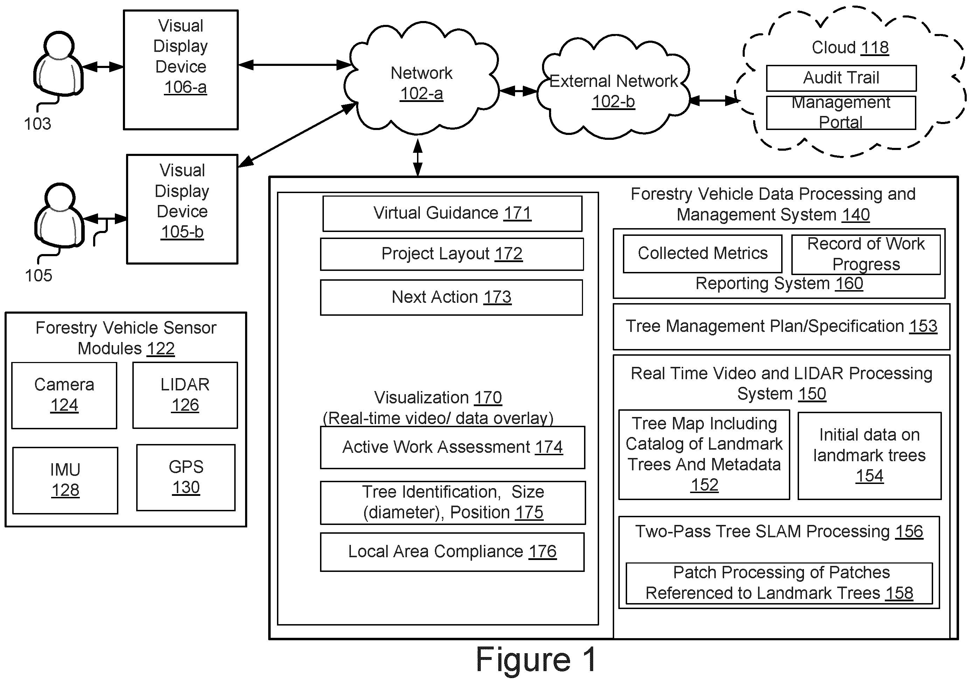

Figure 1 illustrates a system for generating information and visualization to aid in operating a forestry machine to implement a forestry management plan. In one implementation, a forestry vehicle includes a variety of sensors 122, including at least one camera 124, a LiDAR (Light Detection and Ranging) 126 an IMU (Inertial Measurement Unit) 128, and a GPS (Global Position System)130 are typically included.

There may be portions of a remote worksite in which the GPS readings are blocked or of poor accuracy, such as when a forestry vehicle is operating in densely forested regions having features such as rugged hills or valleys.

A forestry vehicle data processing and management system 140 processes the sensor data and generates various types of information to aid in forestry management. In one implementation, the forestry vehicle data processing and management system 140 is implemented as a computing device operating in the cab of a forestry vehicle, such as by leveraging off of computing devices in the cab and/or a tablet computing device in the cab as a few possibilities.

It will be understood that if the forestry vehicle is operating in a region with reliable access to a high bandwidth, low-latency communications network signal with access to external servers or other external computing devices, the data processing could be done remotely. Also, it will be understood that in some cases a forestry vehicle may be operated remotely such that the data processing and management system 140 in some implementations is disposed in a remotely controlled forestry vehicle.

As an illustrative but non-limiting example, an operator 103 in a forestry vehicle is shown in Figure 1 as having access to a visual display device, 106-a, such as a tablet computing device, to view visualizations. However, more generally if there is a Wi-Fi signal or other communications path, a manager 105 could use their own visual display device to view visualizations on a different visual display device 106-b, such as a tablet computing device. Depending on when access to networks is available, data reports may be sent to external cloud-based data storage and management portals 118 such as an audit trail or a management portal. For example, network 102-a could be a LAN or WAN network at a jobsite and network 102-b could be an external network such as that of wireless Internet provider, as one of many possibilities.

There are various challenges addressed by the forestry vehicle data processing and management system 140. In order to facilitate the desired outcomes and step in before mistakes in the field become incidents requiring remediation, real-time (or at least on-board) data processing is desirable to convert the vast quantity of sensor data flowing from the local machine into actionable insights for the local, remote, or automated decision maker controlling the actions of that machine.

This data processing incorporates a wide variety of sources working in concert or separately to achieve one or more control ends for the forestry machine and the work it is meant to be performing. These tasks or duties include three general categories: Understanding where the vehicle is, understanding the local environment, and recommending the next action to take in order to bring the local environment closer to the desired project state.

The intermediary steps in this data processing are performed in real time are stored in memory, files, and databases on the local machine, and coordinated between the local machines, other machines in the area, and in the cloud when networked. The intermediary steps can be saved or shared to continue or share the computation across machines or time and re-used by others in the project area or over the network.

Understanding the local environment is complicated by the unimproved and uncontrolled nature of the elements within that environment. These irregularities in 'what a tree looks like' or even 'what the ground looks like' frustrate approaches that find great success in built or intentional environments.

Understanding the next action to take to achieve the project objectives is complicated by the lack of a universal perspective for the work that has been done, could be done in the rest of the project area, and will be done across the project.

In one implementation, a real time video and LiDAR processing system 150 generates a tree map that includes a catalog of landmark trees and metadata 152. Depending on implementation details, an initial set of landmark trees 154 may optionally be provided from, for example, aerial drone data. A two-pass tree SLAM (Simultaneous Localization and Mapping) processor 156 performs patch processing 158 of patches referenced to landmark trees. In one implementation, a two-stage algorithm (a Tree SLAM) utilizes a patch algorithm, which works in real-time to convert a local LiDAR point cloud into a small map of landmarks to serve as a map patch.

The patches are comprised of several landmarks, with configuration and orientation of objects allowing the next patch to lock into the neighboring patches to build up a wider fabric for navigation and orientation. The real-time scanning places the landmarks into a location and configuration with respect to each other. Once reduced to landmarks, orientations, and sizes, the patches are much easier to manipulate and refine through connections to other patches as subsequent patches are created and better resolution on existing patches are achieved.

Various tree calculations may be performed of tree data in a tree map vs. a management plan and specification 153. For example, there may be a specification for the size and density of trees of specific types in different sections of a worksite to be thinned. Detected basal area calculations of tree width and tree density may be compared with a management plan and associated specification.

More generally, a wide variety of calculations can be performed of detected tree data and compared with details of the specification of a management plan. In one implementation, a reporting system 160 performs reporting operations based on the tree map and information on trees removed, such as generating reports on collected metrics and a record of work in progress.

In one implementation, a visualization system 170 generates a real-time video and data overlays. As examples, the visualization may include virtual guidance 171, project layout 172, next action 173, active work assessment 174, tree identification overlays 175, and local area compliance 176.

A real-time video and LiDAR processing system 150 that performs range finding and object dimensional analysis within the field of view of the LiDAR system. These analyses produce a map of distances, sizes, and when joined with the positioning system a location for each object observed in the immediate vicinity of the vehicle. In one implementation system presents the data about the objects into a live video feed, overlaying those annotations directly into the spatial location of the video frame, of the local environment.

The system 140 performs an assessment of the area covered by the stems of trees within a unit area of analysis, e.g. a basal area calculation generating a metric in units of area per area describing, for example, the fraction of an acre that is comprised by the wood of trees when measured at Breast Height (4'6" on the uphill side of the stem).

The real-time LiDAR processing system 150 performs a SLAM computation to extend geolocation into heavy canopy or steep terrain where other geolocation systems have difficulty (e.g. GPS). This SLAM computation may leverage the static position of tree trunks or features of a detailed ground contour to refine and extend the positional accuracy well beyond the limits of GPS under the same conditions. This SLAM system avoids large loop closures by resolving point cloud data into an arrangement of landmarks, reducing the computational working set to support real-time operations.

The real-time LiDAR processing system 150 observes the objects in the immediate vicinity of the vehicle, mutations in that operating environment, and produces a full map of objects (tree map) of the project area capturing the initial conditions, final conditions, and detailed data about all transformations within that project area (such as location, size, and kind of mutation).

The real-time LiDAR processing system 150 in some implementations incorporates external knowledge, such as aerial lidar, internal algorithms, such as SLAM, and real-time sensing of terrain and objects to create reference patches where vehicle position within that patch is known and locking new patches to these georeferenced prior patches to extend the region of geopositional certainty arbitrarily into the network of interlocking patches.

The real-time LiDAR processing system 150 performs a SLAM calculation leveraging precisely modeled trees as sentinel markers in the positional refinement (Tree Slam).

The real-time system can be used to coordinate local observations, project progress, and project wide requirements and goals to select a sequence of steps that bring the total project closer to the desired end state.

In some implementations, the system takes known project requirements and specifications and generates information and visualizations to aid operators to diligently and faithfully during the execution of the project. This may include providing:
- a system of recording for project compliance requirements and criteria;
- a system of record for project execution progress and activities;
- a system of operator feedback to highlight and emphasize relevant requirements and criteria based on the machine context as assessed by on-board sensors; and
- a system of notification and alerting for operators based on their physical location, time of day, or environmental conditions pertinent to the project performance requirements.

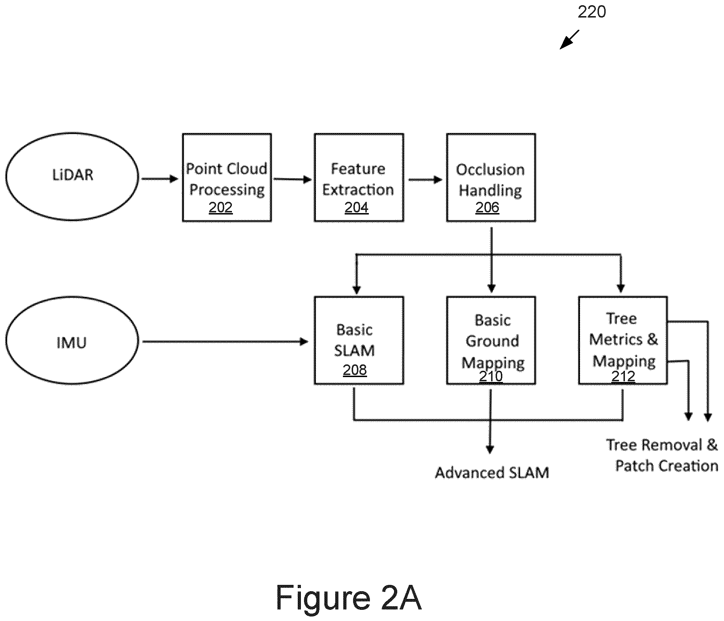

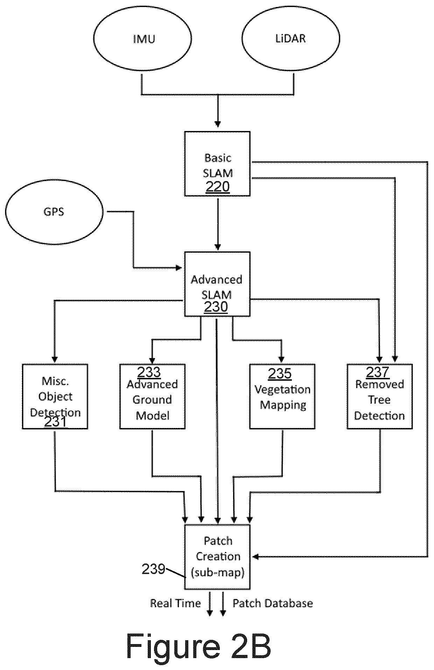

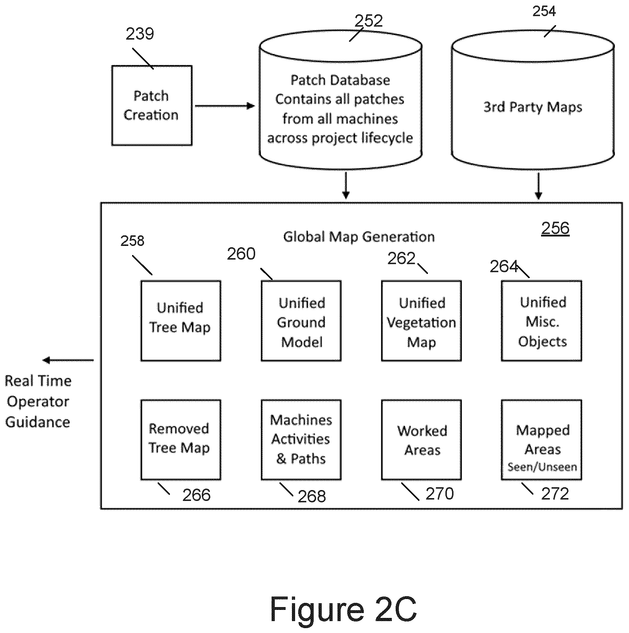

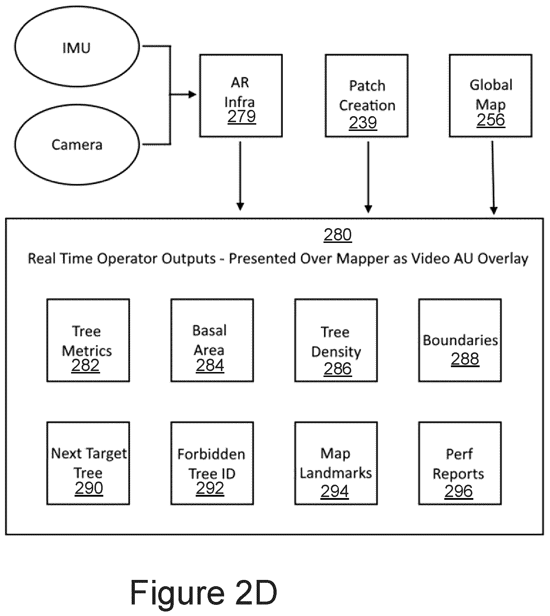

Figures 2A, 2B, 2C, and 2D illustrate in more detail an example implementation of some of the aspects of Figure 1. Figure 2A illustrates a basic SLAM process for LiDAR and IMU sensor data. The LiDAR data source is processed using point cloud processing 202, followed by feature extraction 204, and occlusion handling 206. The IMU sensor data is used to perform basic SLAM 208, basic ground mapping 210, and tree metrics & mapping 212.

Figure 2B illustrates a continuation of Figure 2A, showing aspects of patch creation. The advanced SLAM processor 230 takes into account GPS data The Advanced SLAM processor 230 generates outputs for miscellaneous object detection 231, an advanced ground model 233, vegetation mapping 235, and removed tree detection 237. A patch creation sub-map 239 receives the outputs of the Advanced SLAM processor 230, miscellaneous object detection 231, advanced ground model 233, vegetation mapping 234, removed tree detection 237, and a patch creation signal from the basic SLAM 220.

Figure 2C shows aspects of a global mapper 255 to generate different types of maps and other information to generate real time operator guidance. When patch creation is initiated, a patch database 252 is accessed that in one implementation contains all the patched from all the machines across a forestry project lifecycle. Note that there may also be additional 3^{rd} party maps 254, such as forestry project maps. The global map generation 256 in one implementation generated a unified tree map 258, a unified ground model 260, a unified vegetation map 262, unified miscellaneous objects 264, removed tree map 266, machine activities & paths 268, worked areas 270, and mapped areas seen/unseen 272. This mapping information is used to generate real time operator guidance.

Figure 2D illustrates an example of real time operator outputs 280 showing as an input, the camera video output and IMU data 279 for augmented reality data inputs, patch creation 220, and the global map 256. The real time operator outputs in one implementation are presented over mapper as a video AU overlay. Some examples of real time operator outputs include tree metrics 282, basal area 24, tree density 286, boundaries 288, next target tree 290, forbidden tree ID 292, map landmarks 294, and performance reports 296.

It will be understood that major operations of Figures 2A, 2B, 2C, and 2D may be updated to reflect quasi-real time updates to LiDAR, camera, GPS, and IMU data.

It can be seen in Figures 2A, 2B, 2C, and 2D that various forms of map optimizations are performed, which can take into account the availability of GPS and IMU sensor data. Tree mapping is performed. Various optimization can be performed as implementation details. The patch generation takes into account various sources of information.For example, various optimizations may be performed for the patches to orient, overlap and lock together. Patch creation may in some implementations include storing a create patch in a database and calculating descriptors. Patches are associated with positions. Various constraints may be considered including GPU constraints and IMU odometery constraints on patch position and orientation. In one implementation, a loop closure condition is included, as discussed below in more detail. In one implementation, a scan is packed into a patch based on a threshold condition regarding a number and density of landmarks and an overlap condition with a priority patch is determined. In one implementation in response to satisfying the threshold condition, a patch is linked to priority patches and known patches are adjusted to fit a new configuration of available landmarks.

This approach has several advantages. An algorithm leveraging a tree-based loop closure expedient / scan-to-map operation reduces a SLAM drift in environments where external position correction is denied (e.g., GPS denied environment and/or communications denied such that NTRIP corrections are unavailable). In a forestry environment, GPS accuracy may be reduced in heavily wooded areas and from hills and other obstructions.

Figure 302 is a flow chart of a general method. In block 302 a tree map is generated. Various services may be provided based on the tree map. This may include generating an active work assessment in block 304 by providing information comparing what has been done versus what remains to be done in a project plan, generating virtual guidance 306 on what an operator should do, generating tree information on an individual tree 308, such as information on its size or is otherwise a candidate for removal, local are compliance information regarding a status or actions to be taken in a particular area based on the tree map and project information. More generally, a wide variety of different types of information may be generated to aid project information leveraging off the tree map.

### Diameter Calculation

In one implementation, the real-time video and LiDAR processing system performs range finding and object dimensional analysis within the field of view of the LiDAR system. These analyses produce a map of distances, sizes, and when joined with the positioning system a location for each object observed in the immediate vicinity of the vehicle. This system presents the data about the objects into a live video feed, overlaying annotations directly into the spatial location of the video frame, of the local environment.

LiDAR returns provide a direction and a distance (via time of flight) to all objects in the return radius of the active forestry machine. These returns are clustered into objects where subsequent scans improve the modelled form in two ways: increased confidence in the physical shape and increased perspective as the object moves relative to the LiDAR unit. This provides additional information to fill in all 3 dimensions of the identified objects such that better decisions can be made in the future while enabling immediate decisions to be made several times per second.

A forestry management plan may specify either or both minimum and maximum tree sizes to harvest. In the case of objects that are trees, in one implementation, a bucketing method iteratively refines the diameter at breast height of that tree in order to improve the confidence in the height above ground for the DBH (Diameter Breast Height) measurement. Refining the diameter estimate is important due to consideration like the shape of the tree, which may be out-of-round. Also, the diameter as observed via edge finding in the LiDAR returns. With a bucketing method, the earliest scans begin by identifying a candidate tree, improve with additional observations to resolve the diameter (e.g., into a 2" variance bucket as an example), then as more information removes uncertainty on either or both of the height to make the measurement and the diameter at that point of measurement the likely range in the measured size is reduced to +-0.5", +-0.25" and eventually to 0.1". Note that the bucketing size may be implemented as a configurable parameter.

In one implementation, at each moment the operator is presented with the best available measure of the tree. Empirical tests demonstrated a capability to find the 2" bucket at 50-80' and usually refining down to 0.1" uncertainty as the vehicle passes by the tree (leaving the camera's 120-degree field of view, although the diameter refinement continues outside the field of view of the camera, although the LiDAR has a 360 degree field of view). These are example buckets and other buckets could be used if desired. This approach allows the operator to triage which trees are worth learning more about as candidates for harvesting without holding back information until final certainty is achieved. This has impacts on operator decision making and speed in performance of the work. Consider, in contrast, some of the problems with a conventional slow forestry vehicle that would have to travel out of the way to get close to a tree that is not suitable for harvest such as the case of a tree just over the limit that appears smaller due to its distance from the operator. In this example of the problems with the conventional approach, the operator would have to get out of the cab of their forestry machine, walk to the tree, wrap a measuring tape around it, and return to work. It should also be noted that the automated diameter calculation performs the diameter measurement in a repeatable way across all trees observed, automatically recording their metadata across the project area, eliminating confusion and mistakes from human measurements and reporting errors.

### Basal Area Calculation

In one implementation, the real-time LiDAR processing system preforms an assessment of the area covered by the stems of trees within a unit area of analysis, e.g. a basal area calculation generating a metric in units of area per area describing, for example, the fraction of an acre that is comprised by the wood of trees when measured at Breast Height (4'6" on the uphill side of the stem).

A system for assessing LiDAR data to construct a measure of basal area comprised of qualifying trees within a project as sensed by direct measurement. Direct digitalization of the traditional practices does not result in a full stand measurement of basal area, rather than performing samples of the underlying stand inventory.

As previously discussed, the diameter measurement in one implementation is based on an algorithm for finding correct height for diameter measurements based on ground points from lidar and a ground point under machine. The ground points may be occluded, sloped, or otherwise difficult to distinguish. The measurement height can be any number of traditional forestry heights such as Diameter at Breast Height (4'6" above ground on the uphill side of the tree) or Diameter at Stump Height (4" above the ground).

In one implementation, a method of measuring from different directions, includes a statistical estimation per direction, and statistical combination of visible and invisible directions to arrive at an accurate estimation of the true diameter at the given height, and over the height of the stem a measure of the volume.

### Eliminating Difficulty Executing and Property Weighting Sample Plots

Traditional forestry methods perform a stratified survey throughout the landscape meaning forest types must be classified correctly, measured without location error, and scored in proportion to the real prevalence of each population in the stand. A full census is typically time prohibitive with manual techniques, a challenge avoided with our real-time automated system.

The conventional approach to election of the sampling method attenuates information. Manual techniques, such as using a basal area prism require training, expertise, and making assumptions about what is or is not important information at the time of data collection. Automatically collecting everything preserves full fidelity of the forest character.

The conventional approach includes selection of radii for sample plots, kind, and size. Choice of kind: static or dynamic, and size: fixed or dynamic, when performing sample plots allows the field team to swiftly execute the manual data collection, but these choices influence the computed basal area for that stand.

The conventional approach picks which trees to include or exclude from the sample plots. The computed basal area for a stand is sensitive to systematic inclusions or exclusions, which are decisions different survey teams make using different standards.

In contrast, a LiDAR based survey performed by the system 150 is not a sampling technique. It is a full measurement of the stand referenced to a fixed georeferenced partition. The direct assessment of trees is a complete census of the underlying stand inventory. The outputs of the various manual measurement techniques can be reproduced from the full stand census, but with a digitalized system we need not discard information in order to make the computations more tractable.

As previously discussed, in one implementation, LiDAR unit, as mounted on the machine, surveys every part of the stand where work is performed. During this survey everything within range of the LIDAR's laser is counted and modeled to create a full census of the stand. The range may vary by density of the forest and performance of the laser unit, but usually sits in the range from 20-150m. In one implementation, the scanning occurs at least 5 times per second, building up a real time model of the landscape as the vehicle moves through it, providing census level stand information for all places where work may be performed (without spending effort in places where work will not be performed, as per other broadcast LiDAR techniques like backpack, drone, or aerial scans performed as part of the pre-project planning process).

This full survey approach avoids the great cost of making multiple trips through the project area in order to characterize, plan, and summarize the work later performed, but collects those data at the point of change as the work is being performed. The initial information is collected as the machine approaches and the post-work state is characterized as the machine moves on into the stand.

This is enabled by real-time computation, with alternative approaches performing separate data collection and data analysis steps often separated by time and space (e.g. collecting remotely and processing back at the office where more computing power is available), which often leads to repeated work as the data collection is completed before the analysis has proven sufficient to answer the current question. In one implementation, 5 times per second the locations and shape of all objects in range are identified, their physical dimensions characterized, details noted in space, and merged with known positions from prior scans. This builds up increasing confidence in which objects are what and where, and always presents the best real-time assessment of the immediate surroundings to the best- known fidelity. There is no leaving the work without realizing the picture of the stand is incomplete.

Finally, in one implementation LiDAR based census is geospatially referenced to an R=13 H3 grid, meaning any investigator should be able to return to that location and manually confirm the values collected via the real-time LiDAR system. This repeatability resolves one dimension of the field survey practices question, leaving only uncertainty in the alignment of the location to the globe (e.g. GPS uncertainty).

### Patch Algorithm Example

A real-time LiDAR processing system that performs a SLAM computation to extend geolocation into heavy canopy or steep terrain where other geolocation systems have difficulty (e.g. GPS). This SLAM computation may leverage the static position of the tree or features of a detailed ground contour to refine and extend the positional accuracy well beyond the limits of GPS under the same conditions. This SLAM system uses a combination of point cloud processing and landmark position processing in a way that optimizes computational power and scalability.

Two stage algorithm (Tree SLAM) depends on the patch algorithm which works in real-time to convert a local point cloud into a small map of landmarks to serve as a map patch. These patches are comprised of several features and landmarks, the configuration and orientation of objects allow the next patch to lock into the neighboring patches to build up a wider fabric for navigation and orientation. The real-time scanning places the landmarks into a location and configuration with respect to each other. Once reduced to landmarks, orientations, and sizes, the patches are much easier to manipulate and refine through connections to other patches as subsequent patches are created and better resolution on existing patches are achieved. The following computation runs 5 times per second:

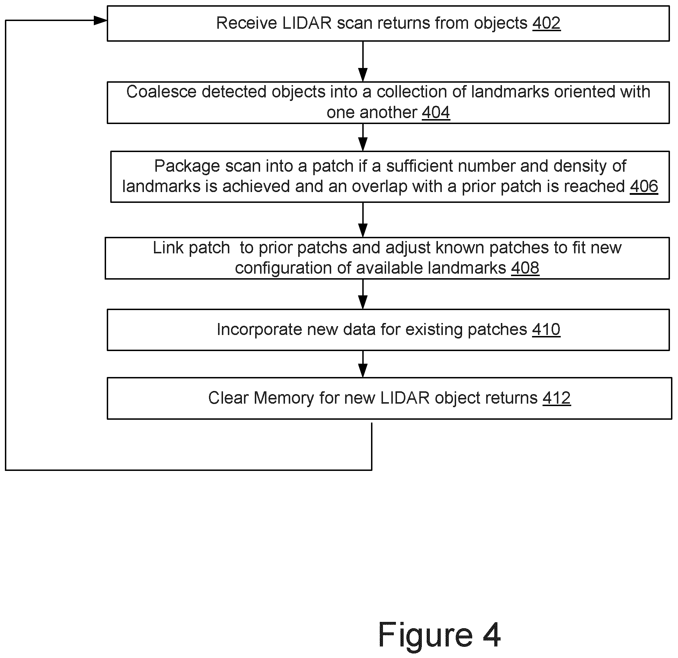

This is illustrated in Figure 4. In block 402, Lidar scans returned from objects are received. In block 404, the detected objects are coalesced into a collection of landmarks oriented with one another. In block 406, the scan is packed into a patch if a sufficient number of and density of landmark is achieved and a desired overlap with a prior patch is reached. This corresponds to a set of threshold conditions for packaging a scan into a patch. In block 408, the patch is linked to prior patches and known patches are adjusted to fit the new configuration of available landmarks. In block 410, new data for existing patches is incorporated. In block 412, n memory is cleared for new LIDAR object returns.

### Additional Example Tree SLAM

The real-time LiDAR processing system performs a SLAM calculation that leverages precisely compressed modeling of feature and landmarks in the positional refinement. SLAM (Simultaneous Localization and Mapping) conventionally relies on a heavy processing step where a large point cloud of LiDAR returns is oriented to one another through a loop-closure, a point where the path of the LiDAR crosses over itself, providing fixed ends of the start and stop for any given section of point cloud data. In contrast, the Tree SLAM algorithm computes patches quickly, such that long running loop closures are unnecessary, compresses those landmark maps into patches, links patches to one another, and then orients the LiDAR's position to the reference framework of landmarks built up in the fabric of patches to perform a real-time SLAM that does not rely on exhaustive point cloud processing or loop closure as per conventional SLAM algorithms.

The objects identified happen to be trees in our context, but any recognizable objects that move slowly or in known ways with respect to the LiDAR unit are suitable for this short range iterative positional refinement.

The memory working set is guarded through the use of abstract patches, simplifications of the point cloud, rather than full fidelity point clouds. The cycle cadence for the algorithm is fast, which avoids managing large working sets for point cloud data, tearing, or streaking in laser returns, and the need for more intensive computations like conventional loop closure.

In one implementation, the tree SLAM uses the Iterative closest point (ICP) algorithm for minimizing the difference between two sets of points.

The resulting interconnected patches, representing reduced objects and their spatial relationships, are then used to orient the vehicle and navigate as it moves through the landscape. The LiDAR laser returns are then used to range-find distances to the known landmark objects in the area, finding a precise position for the vehicle. A variation of the Tree SLAM process using ICP includes the following:
- Start with an empty map;
- Add detected objects (trees) from the last LiDAR scan to the map;
- On every following scan (or N-th scan);
- Detect objects;
- Use ICP (Iterative Closest Point) to match new detections to the local map (potentially leveraging odometry transform as a starting point);
- Verify the match is good;
- If the match is good;
- If there are detections in the last scan that do not appear in the local tree map - add them to the local tree map;
- Update information of the existing trees (e.g. improve the DBH and tree center estimations);
- If the match is of insufficient quality;
- Try again bringing in the point cloud information from the next scan (e.g., a small number of retries allowed);
- Or Stop;
- Save the local tree map;
- Start again;

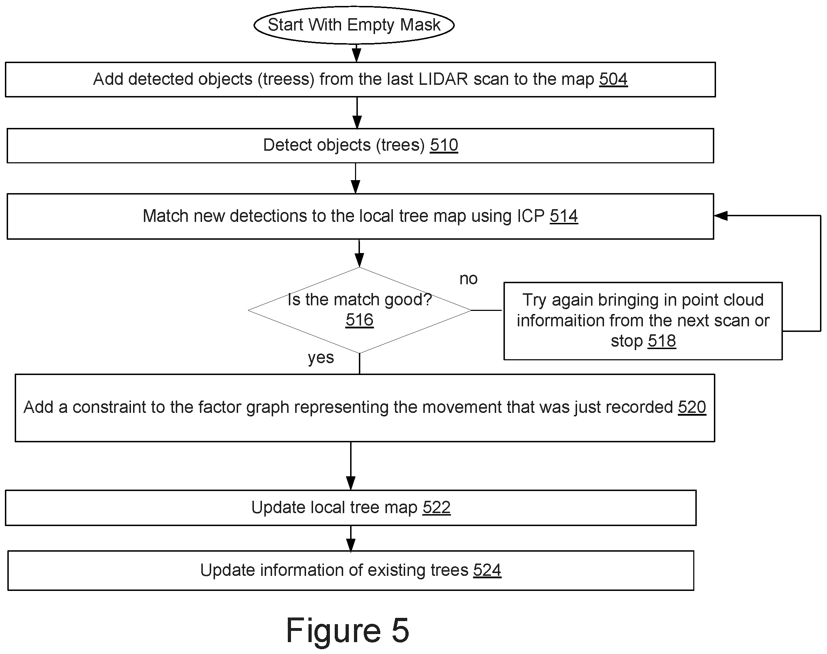

This is illustrated in Figure 5 In block 504, detected objects are added from the most recent last LIDAR scan to the map. Objects (e.g., trees) are detected in block 510. New detections are matched to the local tree map using ICP in block 514. In decision block 516, a decision is made whether the match is good. If not, the process either trees again in block 518 or makes a determination to stop (e.g., stopping after a certain number of tries). If the results are yes, a constraint is added to the factor graph to represent the movement that was just recorded in block 520. The local tree map is updated in block 522. Information on existing trees is updated in block 524.

### Tree Map Calculation

In one implementation, the real-time LiDAR processing system observes the objects in the immediate vicinity of the vehicle, mutations in that operating environment, and produces a full map of objects (tree map) of the project area capturing the initial conditions, final conditions, and detailed data about all transformations within that project area (such as location, size, and kind of mutation).

In one implementation, the tree map (a catalog of landmark objects that happen to be trees) contains physical metadata about the landmark, e.g. location, height, diameter, species, health, age, and other relevant data attached to a stand inventory, as well as a temporal view of the project area. In one implementation, this is used to construct a before and after catalog and census of all objects (trees) in the project area.

This solves a point of difficulty on forestry management projects is that conventionally once cut the tree is no longer available for a DBH measurement, all that remains is the stump. In contrast, tree map captures the location, size, and time of modification to the forest, which supports project transparency and trust between stakeholders with different motivations.

### Position Calculation

A real-time LiDAR processing system that incorporates external knowledge, such as aerial lidar, internal algorithms, such as SLAM, and real-time sensing of terrain and objects to create reference patches where vehicle position within that patch is known and locking new patches to these georeferenced prior patches to extend the region of geopositional certainty arbitrarily into the network of interlocking patches.

In one implementation, the position initialization leverages external information like aerial LiDAR to geolocate landmarks within the operating area or ground contour information collected before the project as well as real-time observations from within the project area, such as locations and configurations of objects (landmarks like trees), GPS information from satellite systems, IMU (inertial measurement unit) data to help contextualize bulk vehicle movements, and our SLAM implementations to cross-validate the vehicle's actual position through weaknesses or outages of the various contributing features for the true position.

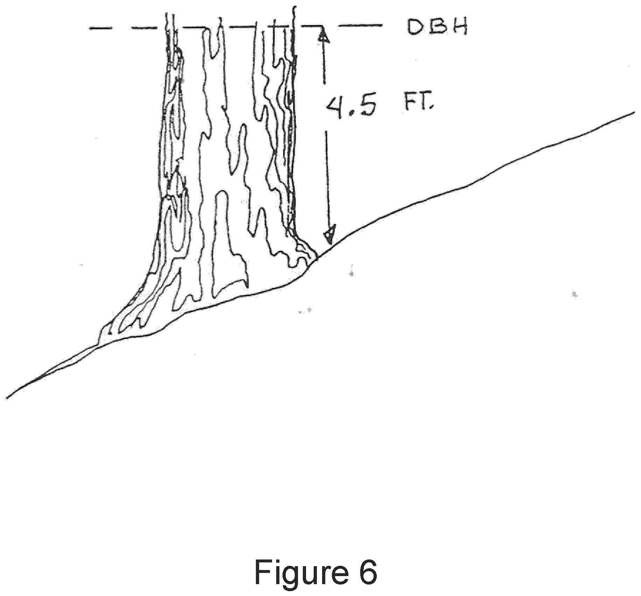

Figure 6 illustrates how a tree diameter measurement assesses the diameter of the stem at breast height (DBH), conventionally at 4' 6" above the ground on the uphill side of the stem. The DBH is measured normal to the stem, rather than parallel to the ground (a chord section).

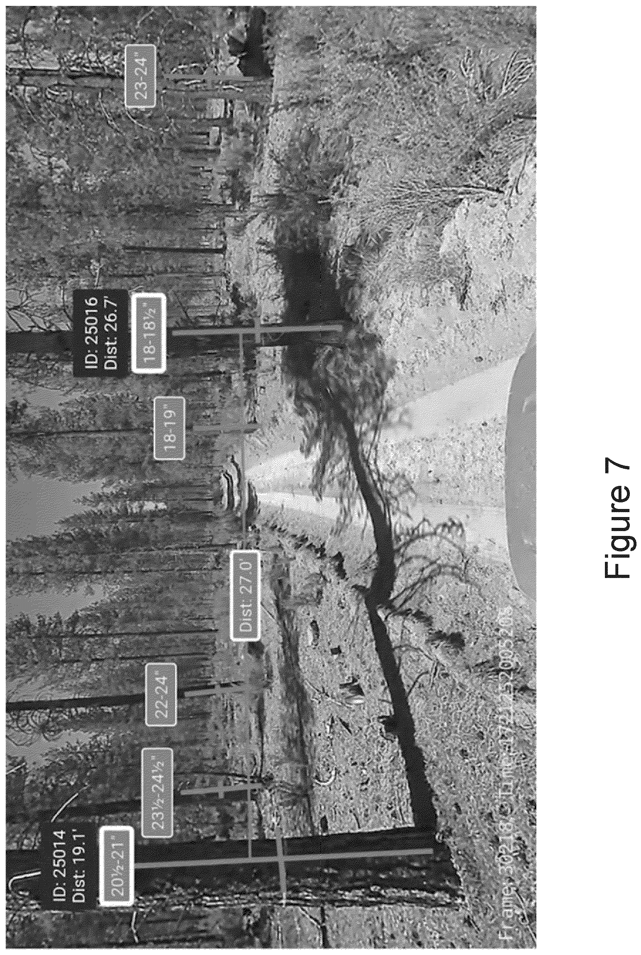

Figure 7 is an illustration of the system of real-time video and data overlay in real-world testing. Two landmark trees are shown with an overlay showing the DBH for each tree as a horizontal line. In one implementation, selecting two trees (e.g., ID 25014 and ID 25016) causes the system to display the distance between them (in this example, 27.0 feet).

In one implementation, the magenta labels note the positions and sizes of identified trees and selecting any two causes the system to present the computed distance between those selected objects. The LiDAR object identification is translated into annotations into the live video feed.

### Real Time Operator Display

A system of operator feedback to present the observed, analyzed, planned, and desired status for the environmental conditions in the immediate vicinity of a forestry machine, such that the operator of that machine may take appropriate action to achieve those goals and end states defined by the plan of work. This user experience involves the combination of interaction, experience, synthesis, observation, and analysis to put in front of the operator the required context to make sense of the immediate surroundings, bringing lacking expertise and awareness to the forestry machine operator such that they may more easily achieve their project goals.

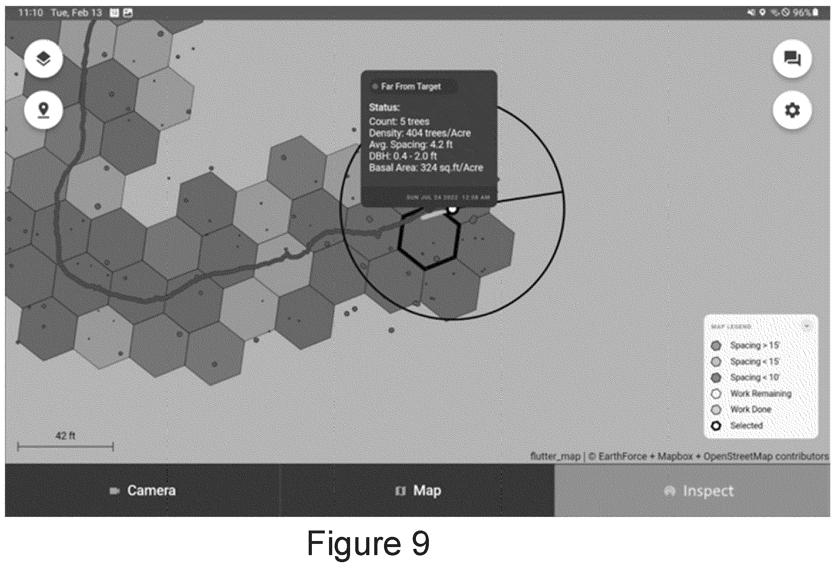

Figures 9, 10, and 11 illustrate an implementation of a user interface presenting the operator of the forestry machine with important context relating to the real time evaluation of the work remaining to be done, the location of the machine with respect to the work, and an interactive view of the immediate environment augmented through the on-machine sensing that this system interacts with. This display updates as the machine moves through the project area, interacting with boundaries for instance. This display updates the colors of the hexagons located around the machine to reflect ongoing work performed by the machine evaluated against the management goals of the project, for instance. This display updates with overlays of measurement metadata over the field of view labeling objects of interest to the performance of the forestry work. In one implementation, these visualizations are color coded and scaled to the distance and position of the machine, supporting first person and overhead orienting views. These examples are illustrative and not meant to be exhaustive or limiting.

### Real Time Local Area Compliance Assessment

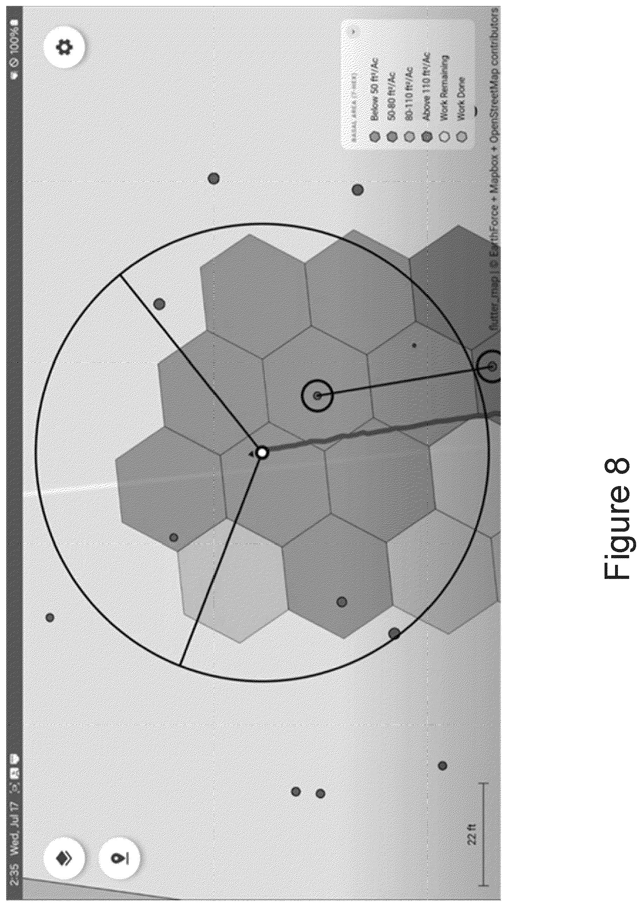

In one implementation, the real time local area compliance assessment combines sensing data about the operational environment with expectations given the planning and design of the work being performed to evaluate the current state of compliance with the end-goals and objectives for the project. Figure 8, as an illustrative and non-limiting example, illustrates a compliance grading with several colored levels allowing real time, graduated, feedback to the operator to assess the approach to target for the work being performed. In this example red hexagons have a basal area above 110 ft²/acre and are far above the target for the final project basal area. Blue hexagons have a basal area below 50 ft²/acre and are far below the target for the final project basal area. Green and yellow hexagons are on the low and high sides of the target basal area for the project representing the ranges 50-80 and 80-110 ft²/acre. These ranges support the operator reaching the target without being overly constrained such that the operator cannot swiftly complete the work. In this example the scaling coincides with a 30' radius sample plot. The size of the circles corresponds to individual tree diameters.

In one implementation the area of inspection coincides with a 30' radius commonly used for sample plot measurements. Figures 8 and 9 illustrate this assessment for two different kinds of evaluation, one counting the number of stems per unit area and the other counting the area of the stems per unit area. As this is a full census representation, each noted tree diameter is proportional and scaled to the measured diameter for those trees in the observed environment around the forestry vehicle.

Figure 8 is based on a methodology of taking the real time mapping data in combination with the work plan in order to generate a visualization that shows where the vehicle is, where it has been, and what state of completeness was last observed for each of those areas. In Figure 8 the scale of evaluation is basal area, the area of the trees per unit area divided by the unit area, and is evaluated over a variety of unit scales such as 1 hexagon, 7 hexagons, 1 acre, etc. This real-time evaluation allows an operator to work against an inspection target that is non-trivial for a human to assess while controlling a forestry vehicle.

### Collected Metrics

Data collection is useful and necessary for real-time assessment as well as for pre or post project evaluation and planning. A sensor kit may be suitable for a variety of kinds of data collection, or they may work separately or together across time to build up a deeper understanding of the forest environment. The data collected may be purely observational, or combined with real-time analysis to produce judgements meant to favor specific project outcomes, such as the evaluation of the current state against the desired state in order to provide timely feedback to the operator of the forestry vehicle as it executes work across the project area.

A wide variety of environmental observations can be made by the system, many of which are commonly used in the description of desired work during a forestry project's execution phase. In one implementation specific metrics such as number of trees, diameters, spacings, and georeferenced positions are measured. Additional metrics like species, health, disease, pest, hydration state, grade, habit, canopy cover, and so forth can be more easily observed by machine sensor and computer analysis than heavy equipment operators controlling forestry machines. These additional observation and evaluation capabilities allow project planners to leverage different measures of project success under a system of active, in situ, feedback.

Figure 9 illustrates an example of a screen capture from an active forestry project from the operator guidance tablet from inside the cab of the vehicle with an overlay of trees to scale (brown dots) providing a visual indication of their size and density, and in this example, reference unit hexagons color coded to highlight regions where trees are too close to one another as reflected through the project requirements and representative of the project objectives.

However, it would be understood that in one implementation, same sensor kit could be mounted on a variety of human, machine, or animal-based platforms, including backpack versions, drone, UTV, and unconventional platforms (donkeys, snowmobiles).

In one implementation, these area appraisals are recorded and reported as the forestry work advances through the project area, providing planning guidance for subsequent physical inspection as well as replayability for subsequent remote assessment of project compliance against project objectives.

### Assessment of Active Work

In reference to Figure 7, in one implementation, a camera video view is overlayed by relevant metadata to provide the forestry equipment operator in the immediate environment and optionally contrast those observations against the project objectives and requirements. In one implementation, a bulk measurement of trees within the field of view and near the machine toolhead is displayed over in the video. This presentation can include a color coding for trees that do not qualify for the project requirements, such as a directive to "cut no tree over 21" in diameter," or simply as shown the bulk diameter measurement of the identified trees in range.

In one implementation, the assessment here includes factors such as species identification, size, health, spacing, volume, position, etc. but is concentrated on visual confirmation of qualification or intent prior to the performance of each forestry action. Each identified activity is recorded and logged via the system including the video feed, so that stakeholders outside the project execution environment can review and assess the work as it was performed.

In one implementation the interactive user interface a tablet display is mounted near the forestry vehicle controller's chair. Alternative implementations may include a heads-up display or overlay and integration into the visual feed for a remote teleops control system.

In Figure 7 the example of a user interface includes metadata and metrics assessed from the sensed environment in real time. The labels for notable objects, trees here, include an identifier for that object, distance from the machine, and diameter at breast height for that object. Interacting with one of the objects allows the operator to select another object and perform various relevant measurements, the results of which are presented in the user interface. The labels in the user interface may display observed physical characteristics assessed by the onboard sensors and alternatively may show the determination of judgements on which work ought to be performed or avoided to achieve the expectations given the known project requirements and desired outcomes.

Consider the need for downstream consumption of project data. The unique tree identifier assessed and recorded by the hardware sensors connect observed characteristics of the project before, during, and after completion of the work to a 3rd party record of that work that may be queried offline and audited for compliance without mandating physical detection of all anomalies in the field.

The tree-by-tree accountability outlined here extends to the operator as automatic work tracking, saving a regular manual progress reporting task, and supports an in-line inspection facilitating a single pass of execution to reach compliance on the forestry project. This real-time feedback links the initial project execution to the corrective action, avoiding long and contentious feedback cycles.

### Record of Work Progress & Automated Reporting

In one implementation, the system records the position and identity of each notable object within the project area including locations where the kinds of work were performed, such as the removal of trees. The automated data collection records physical measurements, analyzes operator and forestry vehicle behaviors to attribute working activity, and automatically reports these metadata to local supervisors, the cloud, and a management portal accessible over the internet.

Consider an example of traditional oversight performed by human supervisors observing the impacts of work in person. When oversight is delivered in person only the activities that are visible during the oversight act are evaluated and only those areas visited in person are assessed. The manual process leaves opportunities of omission, both in where attention is focused and when, and places extensive time demands on the oversight process. The combination of automated recording and reporting work from within the project area allows the human oversight time to remain focused on the activity that is most notable and maximize the impact of oversight when in-person oversight is performed.

### Virtual Guidance and Project Layout

In one implementation visualization of virtual boundaries in combination with in-cab feedback are combined to provide the operator with awareness of the project layout. The visualization may make use of a tablet facing the operator, audio tones, and vibratory alerts to convey proximity, coincidence, and violation of project boundaries. Different kinds of boundary, for instance watercourse buffers, project boundaries, and wildlife or ecology zones, may convey their presence through a different combination of the elements in part or together.

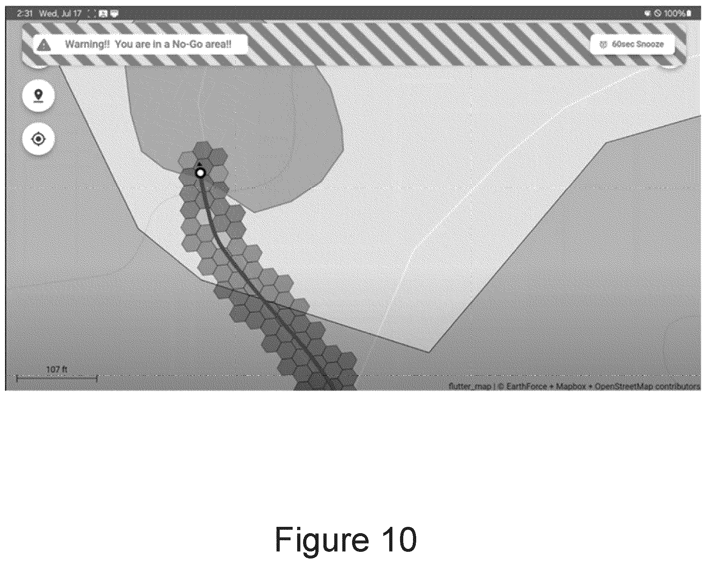

In Figure 10 a user interface display shows a dot with an arrow indicating the facing of a forestry vehicle just inside the boundary of an exclusion zone defined as part of the project layout definition. A colorful notification is displayed warning the operator that the forestry vehicle is in a place where no forestry vehicle should be. The path leading to this location crosses an open area and starts from the bottom of the screen on the outside of this project area, demonstrating the elements of virtual project layout and real time operator guidance.

Consider an example project planned and physically laid out using conventional practices. This process of scouting, estimation, evaluation, and assignment proceeds the work of execution, supervision, and sign-off for the work as performed, and through the end to end involves many subcontractors and several years of activity from start to finish. Over this time each participant brings their own context to the interpretation of the work and signs of work left by the prior participants, resulting in a risk of misunderstanding and accidents. The in-cab display of project layout connects across the participation and duration of the project to bring the latest understanding of project layout in front of the operator in the cab at the moment of project execution.

### Alternate Implementations

In the above description, for purposes of explanation, numerous specific details were set forth. It will be apparent, however, that the disclosed technologies can be practiced without any given subset of these specific details. In other instances, structures and devices are shown in block diagram form. For example, the disclosed technologies are described in some implementations above with reference to user interfaces and particular hardware.

Reference in the specification to "one embodiment", "some embodiments" or "an embodiment" means that a particular feature, structure, or characteristic described in connection with the embodiment is included in at least some embodiments of the disclosed technologies. The appearances of the phrase "in some embodiments" in various places in the specification are not necessarily all referring to the same embodiment.

Some portions of the detailed descriptions above were presented in terms of processes and symbolic representations of operations on data bits within a computer memory. A process can generally be considered a self-consistent sequence of steps leading to a result. The steps may involve physical manipulations of physical quantities. These quantities take the form of electrical or magnetic signals capable of being stored, transferred, combined, compared, and otherwise manipulated. These signals may be referred to as being in the form of bits, values, elements, symbols, characters, terms, numbers, or the like.

These and similar terms can be associated with the appropriate physical quantities and can be considered labels applied to these quantities. Unless specifically stated otherwise as apparent from the prior discussion, it is appreciated that throughout the description, discussions utilizing terms for example "processing" or "computing" or "calculating" or "determining" or "displaying" or the like, may refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The disclosed technologies may also relate to an apparatus for performing the operations herein. This apparatus may be specially constructed for the required purposes, or it may include a general-purpose computer selectively activated or reconfigured by a computer program stored in the computer.

The disclosed technologies can take the form of an entirely hardware implementation, an entirely software implementation or an implementation containing both software and hardware elements. In some implementations, the technology is implemented in software, which includes, but is not limited to, firmware, resident software, microcode, etc.

Furthermore, the disclosed technologies can take the form of a computer program product accessible from a non-transitory computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

A computing system or data processing system suitable for storing and/or executing program code will include at least one processor (e.g., a hardware processor) coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including, but not limited to, keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modems and Ethernet cards are just a few of the currently available types of network adapters.

Finally, the processes and displays presented herein may not be inherently related to any particular computer or other apparatus. Various general-purpose systems may be used with programs in accordance with the teachings herein, or it may prove convenient to construct a more specialized apparatus to perform the required method steps. The required structure for a variety of these systems will appear from the description below. In addition, the disclosed technologies were not described with reference to any particular programming language. It will be appreciated that a variety of programming languages may be used to implement the teachings of the technologies as described herein.

The foregoing description of the implementations of the present techniques and technologies has been presented for the purposes of illustration and description. It is not intended to be exhaustive or to limit the present techniques and technologies to the precise form disclosed. Many modifications and variations are possible in light of the above teaching. It is intended that the scope of the present techniques and technologies be limited not by this detailed description. The present techniques and technologies may be implemented in other specific forms without departing from the spirit or essential characteristics thereof. Likewise, the particular naming and division of the modules, routines, features, attributes, methodologies, and other aspects are not mandatory or significant, and the mechanisms that implement the present techniques and technologies or its features may have different names, divisions, and/or formats. Furthermore, the modules, routines, features, attributes, methodologies, and other aspects of the present technology can be implemented as software, hardware, firmware, or any combination of the three. Also, wherever a component, an example of which is a module, is implemented as software, the component can be implemented as a standalone program, as part of a larger program, as a plurality of separate programs, as a statically or dynamically linked library, as a kernel loadable module, as a device driver, and/or in every and any other way known now or in the future in computer programming. Additionally, the present techniques and technologies are in no way limited to implementation in any specific programming language, or for any specific operating system or environment. Accordingly, the disclosure of the present techniques and technologies is intended to be illustrative, but not limiting.

## Claims

1. A forestry vehicle sensor system, comprising:
sensors disposed on the forestry vehicle including a camera, a light detection and ranging (LIDAR) senor, an inertial management unit (IMU), and a global position system (GPS) sensor,
a video and LIDAR processing system configured to generate a tree map including a catalog of landmark trees and metadata including performing LIDAR-based Simultaneous Localization and Mapping (SLAM) with patch processing of patches referenced to landmark trees to create reference patches where vehicle position within that patch is known and locking new patches to georeferenced prior patches; and
wherein a real time tree map provides patch position information coordinated with real time video.

2. The system of claim 1, wherein the video and LIDAR processing system performs tree detection and map optimization to aid in tree mapping.

3. The system of claim 1 or claim 2, wherein patch processing includes coalescing detection objects into a collection of landmark trees oriented with one another.

4. The system of claim 3, wherein a scan is packed into a patch based on a threshold condition regarding a number and density of landmarks and an overlap condition with a priority patch is determined.

5. The system of claim 4, wherein in response to satisfying the threshold condition, a patch is linked to priority patches and known patches are adjusted to fit a new configuration of available landmarks.

6. The system of claim 4 or claim 5, further comprising incorporating new data for existing patches.

7. The system of any preceding claim, further comprising a visualization subsystem to generate overlays of tree information in a video camera display.

8. The system of any preceding claim, further comprising a visualization subsystem to generate overlays of tree information in a video camera display to generate an active work assessment display.

9. The system of any preceding claim, further comprising a visualization subsystem to generate virtual guidance on a next action display based on the tree map and a forestry project specification.

10. The system of any preceding claim, where the system is configured to generate a portion of a forest survey of tree present at an initial time and trees removed at a project completion.

11. The system of any preceding claim, wherein the system generates a visualization of tree diameter and tree density in at least one region.

12. The system of any preceding claim, wherein the system generates an estimate of tree diameter that is refined for a particular tree as the forestry vehicle approaches.

13. The system of any preceding claim, wherein the system generates a visualization of active work having a camera video view overlayed with metadata selected based on forestry project objectives and requirements.

14. The system of any preceding claim, wherein the system generates a record of forestry work progress.

15. The system of any preceding claim, wherein large loop closures of the SLAM are prevented by resolving point cloud data into an arrangement of landmarks,

16. A forestry vehicle sensor system, comprising:
a video and LIDAR processing system receiving data outputs from sensors disposed on the forestry vehicle including a camera, a light detection and ranging (LIDAR) sensor, an inertial management unit (IMU), and a global position system (GPS) sensor,
the video and LIDAR processing system configured to generate a tree map including a catalog of landmark trees and metadata including performing LIDAR-based Simultaneous Localization and Mapping (SLAM) with patch processing of patches referenced to landmark trees to create reference patches where vehicle position within that patch is known and locking new patches to georeferenced prior patches; and
wherein a real time tree map provides patch position information coordinated with real time video.
